(19) Europäisches Patentamt
European Patent Office
Office européen des brevets

(11) Veröffentlichungsnummer: **0 217 116 B1**

(12) **EUROPÄISCHE PATENTSCHRIFT**

(45) Veröffentlichungstag der Patentschrift: **04.04.90**

(51) Int. Cl.⁴: **C08G 65/28,** C11D 3/00

(21) Anmeldenummer: **86111692.9**

(22) Anmeldetag: **23.08.86**

(54) **Als Entschäumer verwendbare Alkylenoxid-Blockpolymere.**

(30) Priorität: **31.08.85 DE 3531212**

(43) Veröffentlichungstag der Anmeldung: **08.04.87 Patentblatt 87/15**

(45) Bekanntmachung des Hinweises auf die Patenterteilung: **04.04.90 Patentblatt 90/14**

(84) Benannte Vertragsstaaten: **AT BE CH DE FR GB IT LI NL SE**

(56) Entgegenhaltungen:
**EP-A- 0 055 818**
**DE-A- 2 360 020**
**FR-A- 2 204 683**
**US-A- 4 510 067**

(73) Patentinhaber: **Henkel Kommanditgesellschaft auf Aktien, Postfach 1100 Henkelstrasse 67, D-4000 Düsseldorf-Holthausen(DE)**

(72) Erfinder: **Lange, Fritz, Dr., Baderweg 82, D-4300 Essen(DE)**
Erfinder: **Höfer, Rainer, Dr., Klever Strasse 31, D-4000 Düsseldorf(DE)**
Erfinder: **Schmid, Karl-Heinz, Dr., Stifterstrasse 10, D-4020 Mettmann(DE)**
Erfinder: **Asbeck, Adolf, Am Langen Weiher 51, D-4000 Düsseldorf(DE)**
Erfinder: **Herrmann, Klaus, Köpenicker Strasse 33, D-4019 Monheim(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 217 116 B1

**Beschreibung**

Polypropylenoxid-Addukte an Glycerin und Polyglycerin sind bekannt. Sie werden gemäß DE 12 61 618, DE 12 80 455, DE 23 60 020 und US 3 078 236 als Entschäumer in Wasch- und Reinigungslösungen eingesetzt. Es wurde nun ein Alkylenoxid-Blockpolymeres dieser Verbindungsklasse gefunden, das sich durch überlegene schauminhibierende Eigenschaften auszeichnet.

Gegenstand der Erfindung ist ein Blockpolymeres der Formel

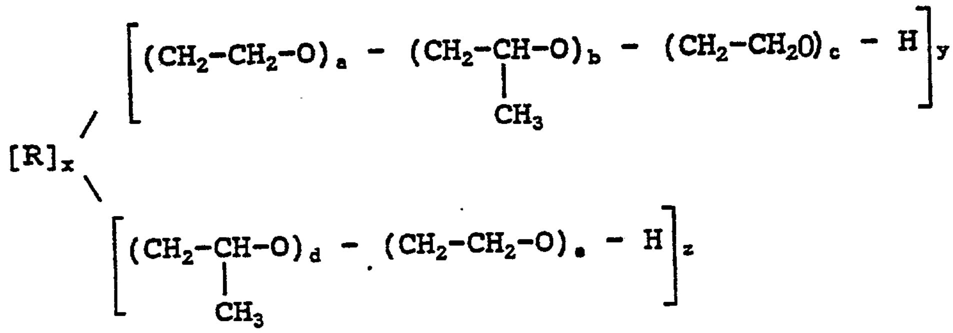

in der R für einen Glycerin- oder Polyglycerinrest mit dem Polymerisationsgrad x = 1 bis 6 steht und die Indices y = (x - z + 2), z = 0 bis 4, a = 1 bis 15, b = 20 bis 100, c = 1 bis 15, d = 20 bis 150 und e = 1 bis 15 bedeuten mit der Maßgabe, daß die Summen (a + c + e) = 3 bis 20, (b + d) = 40 bis 200 und (c + e) = 1 bis 15 bedeuten und y mindestens den Wert 1 besitzt.

Bevorzugt sind solche Blockpolymeren, in denen die Indices y mindestens = 2, a = 1 bis 5, b bzw. d = 30 bis 100 und c bzw. e = 1 bis 5 bedeuten und die Summe (a + c + e) = 3 bis 15 beträgt. Weiterhin sind solche Blockpolymeren besonders bevorzugt, in denen R für einen Glycerinrest steht, d. h. in denen x = 1 bedeutet. In diesen, vom Glycerin abgeleiteten Blockpolymeren sind im allgemeinen 2 bis 3 Hydroxylgruppen mit Ethylenglykolethergruppen substituiert, d. h. y steht für 2 oder 3 und z für 0 oder 1.

Die Herstellung der Blockpolymeren erfolgt nach an sich bekannten Verfahren und wird vorzugsweise unter Druck und bei erhöhter Temperatur, beispielsweise 80 °C bis 200 °C, bevorzugt 100 °C bis 130 °C, in Gegenwart saurer oder alkalischer Katalysatoren durchgeführt. Saure Katalysatoren sind beispielsweise LEWIS-Säuren, wie Bortrifluorid oder Aluminiumchlorid. Bevorzugt sind alkalische Katalysatoren wie die Alkoholate, Hydroxide, Oxide, Carbonate, Hydride oder Amide von Alkali- oder Erdalkalimetallen. Besonders bevorzugt sind die Alkoholate, beispielsweise die Methylate oder Ethylate sowie die Hydroxide des Natriums oder Kaliums. Die Katalysatoren werden im allgemeinen in Mengen von 0,05 bis 3 Gew.-%, vorzugsweise von 0,1 bis 1 Gew.-%, bezogen auf das Endprodukt eingesetzt. Nach beendeter Umsetzung kann der Katalysator durch Neutralisation inaktiviert und das gebildete Salz mechanisch entfernt werden. In den Fällen, in denen seine Anwesenheit nicht stört, kann er auch in dem Produkt verbleiben, was mit Rücksicht auf die geringen Mengen, in denen das Blockpolymere als Schauminhibitor eingesetzt wird, in der Regel völlig unbedenklich ist.

Als Ausgangsmaterial dient insbesondere Glycerin sowie dessen Gemische mit Polyglycerinen. Die bei der technischen Gewinnung von Glycerin, beispielsweise als Destillationsrückstände, anfallenden Polyglycerine, die im allgemeinen einen durchschnittlichen Polymerisationsgrad von 2 bis 6 aufweisen, können als Ausgangsmaterial verwendet werden, gegebenenfalls auch nach Vermischen mit mehr oder weniger großen Mengen an monomerem Glycerin. Vorzugsweise wird jedoch Glycerin als Ausgangsmaterial verwendet. Technische, insbesondere verfärbte Ausgangsmaterialien werden zweckmäßigerweise zuvor mit chemischen oder adsorptiv wirkenden Bleichmitteln behandelt und vor der Umsetzung entwässert, beispielsweise durch Erhitzen im Vakuum.

Nach Zusatz des Katalysators wird das Ausgangsmaterial unter Rühren in einer 1. Stufe mit 1 bis 15 Mol, vorzugsweise 2 bis 10 Mol Ethylenoxid umgesetzt. Nach Absinken des Drucks im Autoklaven, was im allgemeinen 0,5 bis 1,4 Stunden erfordert und das Ende der Reaktion anzeigt, werden unter weiterem Rühren 50 bis 250 Mol, vorzugsweise 80 bis 200 Mol Propylenoxid unter Druck zugeführt. Nach Abschluß der 2. Reaktionsstufe, angezeigt durch Druckabfall, erfolgt in entsprechender Weise die Umsetzung mit 1 bis 15 Mol, vorzugsweise 2 bis 10 Mol Ethylenoxid. Die gesamte in der 1. und 3. Stufe angewendete Menge Ethylenoxid beträgt 2 bis 20 Mol, vorzugsweise 3 bis 15 Mol. Da sich die Menge des Reaktionsproduktes von Stufe zu Stufe, insbesondere innerhalb der 2. Stufe, vervielfacht, wird die Reaktion zweckmäßigerweise mehrfach unterteilt.

Die Zusammensetzung der Blockpolymeren hinsichtlich des Verhältnisses der beiden Indices y und z zueinander ist in gewissem Maße von der Anzahl (a) der Ethylenoxidgruppen abhängig. Ethylenoxid reagiert bekanntlich bevorzugt mit primären Hydroxylgruppen. Daher reagieren in der ersten Stufe überwiegend die beiden primären Hydroxylgruppen des Glycerins bzw. Polyglycerins und anschließend bevorzugt die intermediär gebildeten Ethylenglykolether mit Ethylenoxid. Die Umsetzung mit Propylenoxid verläuft unter Bildung sekundärer Hydroxylgruppen, weshalb schon kurz nach Beginn der Propoxylierungsstufe sowohl die Hydroxylgruppen des sich aufbauenden Alkoxylierungsproduktes als auch die bis dahin noch nicht umgesetzten Hydroxylgruppen des Ausgangsmaterials in gleichem Maße propoxyliert werden können. Daraus folgt, daß geringe Anteile an Ethylenoxid in der 1. Stufe, z. B. bei a = 1 bis 3, zu vergleichsweise höheren Werten von z führen und daß andererseits mit steigendem Wert von a der Wert von z abnimmt.

Die Blockpolymeren sind farblose bis schwach gelblich gefärbte, Flüssigkeiten, deren Viskosität etwa der des Glycerins entspricht. Sie können unmittelbar oder nach vorherigem Dispergieren in Wasser oder Lösen in organischen Lösungsmitteln, beispielsweise niedermolekularen Alkoholen, zum Einsatz gebracht werden. Sie können auch mit Verschnittsubstanzen, Dispergiermitteln oder weiteren schauminhibierend wirkenden Verbindungen vermischt und in dieser Form eingesetzt werden. Beispiele hierfür sind Polyglykoletherderivate von Alkoholen oder Fettsäuren, Fettsäureester und Paraffine bzw. Paraffinöle. Sie können auch auf Trägerkörner, die aus einem saugfähigen Material bestehen, aufgebracht werden und in dieser Form, d. h. als schütt- und rieselfähige Adsorbate, zum Einsatz kommen. Geeignete Trägermaterialien sind z. B. lockere, insbesondere sprühgetrocknete Salze wie Sulfate, Carbonate, Phosphate, Polyphosphate, Silikate und Borate des Natriums oder Magnesiums, feinteiliges Siliciumdioxid (Kieselgur, Aerosil ® ) bzw. Aluminiumoxid sowie feinteilige Tone, Bentonite und Alumosilikate sowie Gemische derartiger Adsorptionsmittel.

Die Blockpolymeren sowie ihre Zubereitungen sind hochwirksame Entschäumer und eignen sich für zahlreiche Einsatzgebiete, insbesondere in der Nahrungsmittelindustrie und in der chemischen Verfahrenstechnik. Beispiele hierfür sind die Zuckerindustrie (Entschäumung von Melasse), Gärindustrie (Entschäumung von Hefe- und Enzymlösungen), Stärkeindustrie (Gewinnung von Kartoffelstärke) sowie die Herstellung von Phosphorsäure aus mineralischen Phosphaten. Weitere Einsatzgebiete sind industrielle Reiniger und Reinigungsverfahren, insbesondere bei der Spritzreinigung und dem Reinigen von Flaschen sowie die Verwendung als schaumarme Netzmittel bzw. als Entschäumer bei Polymerisationsreaktionen.

Der besondere Wert der erfindungsgemäßen Blockpolymeren ist darin zu sehen, daß sie ihre schauminhibierende Wirkung bei der Anwendung über lange Zeit beibehalten. In zahlreichen technischen Prozessen werden die Behandlungslösungen über einen längeren Zeitraum einer intensiven mechanischen Bearbeitung und erhöhten Temperaturen ausgesetzt, beispielsweise bei Eindampfungsprozessen mit starker Umwälzung der Lösung. Zwar kennt man eine Reihe von Schaumdämpfungsmitteln, die in solchen Fällen einen spontanen Zerfall des Schaums bewirken. Nach kurzer Zeit läßt die Wirkung des Inhibitors jedoch nach und es baut sich erneut Schaum auf. Andere Produkte zerstören den Schaum verhältnismäßig langsam, aber bewirken eine sehr anhaltende Schaumdepression. Die erfindungsgemäßen Mittel zeichnen sich sowohl durch eine hohe Spontanwirkung als auch eine ausdauernde Langzeitwirkung aus. Gegenüber zahlreichen Schauminhibitoren auf Silikon- bzw. Paraffin-Basis haben sie den wesentlichen Vorteil, daß sie das Substrat nicht hydrophobieren.

## Beispiele

### I. Herstellung der Blockpolymeren

a) 444 g (4,8 Mol) wasserfreies Glycerin wurden mit 8,9 g Natriummethylat (eingesetzt als 30%ige methanolische Lösung) vermischt und nach Entfernen des Methanols durch Erhitzen im Vakuum in einem Autoklaven unter Rühren bei 180 °C mit 1550 g (35,4 Mol) Ethylenoxid (EO) im Verlauf von 2 Stunden umgesetzt. Nach Absinken des Drucks wurde noch 30 Minuten nachgerührt und dann das Produkt abgekühlt.

b) 364 g (0,89 Mol) des ethoxylierten Glycerins (7,3 EO) wurden mit 17,6 g KOH (in 30%iger methanolischer Lösung) nach Entfernen des Methanols im Vakuum in einem Autoklaven mit 1630 g (28,2 Mol) Propylenoxid (PO) unter Rühren bei 120 °C umgesetzt. Nach Absinken des Drucks wurde noch 30 Minuten bei 120 °C weitergerührt. Das abgekühlte Produkt entsprach der Zusammensetzung R + 7,3 EO + 32 PO.

c) 564 g (0,24 Mol) des gemäß Versuch b erhaltenen Umsetzungsproduktes wurden nach Zugabe von 12,8 g KOH (in 30%iger methanolischer Lösung) und Entfernen des Methanols im Vakuum in einem Autoklaven bei 120 °C unter Rühren mit weiteren 1395 g (24,1 Mol) Propylenoxid zur Reaktion gebracht und nach Absinken des Drucks noch 30 Minuten bei 120 °C weitergerührt. Anschließend wurden 59 g (1,34 Mol) Ethylenoxid zugeführt. Nach Absinken des Drucks wurde das Reaktionsgut noch 30 Minuten weitergerührt und abgekühlt. Es wurde ein praktisch farbloses Produkt erhalten, dessen Zusammensetzung theoretisch

$$R - (CH_2CH_2O)_{7,2} - (CH_2\underset{\substack{|\\ CH_3}}{C}H-O)_{135} - (CH_2CH_2O)_6 - H$$

lautete, worin R für den Glycerinrest steht.

Die analytisch bestimmte Hydroxylzahl (OHZ) betrug 30. Die Abweichung vom theoretischen Wert erklärt sich daraus, daß geringe Anteile des Propylenoxids während der Alkoxylierungsreaktion zu Allylalkohol isomerisieren, der dann mit weiterem Propylenoxid zu dem entsprechenden Polypropylenglykolether weiter reagiert. Dieses Nebenprodukt stört bei der Anwendung der Produkte nicht.

II. Anwendungstechnische Prüfung

Die Schaumprüfung wurde wie folgt durchgeführt:
Eine abgemessene Versuchslösung wird in einen graduierten Standzylinder mit einem Fassungsvermögen von 5 Liter überführt. Mittels einer Kreiselpumpe wird die Lösung am Boden des Standzylinders angesaugt und zu einem Auslaufrohr, das in Höhe der Oberkante des Standzylinders endet, gefördert. Die Lösung gelangt in freiem Fall wieder in den Standzylinder und erzeugt beim Auftreffen auf die Flüssigkeitsoberfläche Schaum. Nach kurzer Zeit stellt sich eine konstante Schaumhöhe und damit ein für die weitere Messung verwertbares Ausgangsschaumvolumen ein.

Der zu prüfende Schauminhibitor wird in einem inerten Lösungsmittel (5gewichtsprozentige Lösung in Dioxan) gelöst und mittels einer Mikropipette auf die Schaumsäule aufgetropft. Das Schaumvolumen wird bei konstant weiter betriebener Umlaufpumpe in gewissen Zeitabständen gemessen. Eine tabellarische Aufstellung dieser Meßwerte ermöglicht eine Aussage über den spontanen Schaumzerfall und die Langzeitwirkung des getesteten Schauminhibitors.

Inhibitoren, bei deren Anwendung der Schaum zwar spontan zerfällt, sich innerhalb kurzer Zeit jedoch wieder weitgehend aufbaut, können auf diese Weise als unbrauchbar bzw. wenig geeignet identifiziert werden. Das gleiche gilt für Mittel mit guter Langzeitwirkung, deren spontane Schaumzerstörung jedoch nur wenig ausgeprägt ist.

Zum Vergleich wurden folgende Verbindungen getestet, die bereits für ähnliche Zwecke verwendet bzw. als geeignet beschrieben wurden (Abkürzungen: EO = angelagertes Ethylenoxid, PO = angelagertes Propylenoxid).

A) Polyglycerin + 22 PO
B) Polypropylenglykol (MG = 2020)
C) Pluronic L61 $^R$
D) Ölsäure + 1 PO
E) Tallölfettsäure + 3 EO
F) Ricinusöl + 11 EO
G) technischer Oleylalkohol + 2 EO
H) Destillationsrückstand aus der Oxoalkohol-Synthese + 7 % EO + 27 % PO
I) Trimethylolpropan + 22 PO

Der handelsübliche Entschäumer Pluronic L61 ist ein nach dem Schema EO-PO-EO aufgebautes Blockpolymeres aus 10 % EO und 90 % PO mit einem Molekulargewicht von ca. 2 000.

Als Testlösungen wurden verwendet:

a) 100 g durch Feinstmahlung aus rohen Kartoffeln hergestellter Kartoffelschleim, dispergiert in 400 ml Wasser,
b) 100 ml Melasse in 400 ml Wasser,
c) 100 ml Zuckerrübensaft in 400 ml Wasser,
d) Rohphosphorsäure

Es wurden jeweils 0,05 ml einer Lösung von 5 g Entschäumer in 95 g Dioxan eingesetzt, was einer Menge von 5 mg Entschäumer auf 1 Liter Substratlösung entspricht. Die Temperatur der Testlösungen betrug 25 °C.

III. Ergebnisse

1) Lösung a, Anfangsschaumvolumen 1640 ml

| Inhibitor | Schaumvolumen nach Minuten | | | | | | |
|---|---|---|---|---|---|---|---|
| | 0,5 | 1 | 2 | 5 | 10 | 20 | 30 |
| 1 | 800 | 660 | 600 | 600 | 660 | 860 | 960 |
| A | 980 | 820 | 760 | 760 | 900 | 1260 | 1520 |
| B | 820 | 700 | 660 | 680 | 760 | 900 | 1040 |
| C | 1420 | 1440 | 1500 | 1660 | - | - | - |
| D | 1500 | 1300 | 1140 | 1140 | 1200 | 1240 | 1320 |
| E | 1200 | 1180 | 1160 | 1220 | 1420 | 1420 | 1440 |
| F | 860 | 700 | 620 | 640 | 680 | 840 | 1040 |
| G | 1120 | 960 | 800 | 780 | 940 | 1340 | 1500 |
| H | 900 | 780 | 700 | 700 | 760 | 900 | 1140 |

Tabelle 1

Das erfindungsgemäße Mittel ist in allen Bereichen den Vergleichsprodukten überlegen.

2) Lösung b, Anfangsschaumwert 2000 ml

| Inhibitor | Schaumvolumen nach Minuten | | | | | | |
|---|---|---|---|---|---|---|---|
| | 0,5 | 1 | 2 | 5 | 10 | 20 | 30 |
| 1 | 760 | 660 | 640 | 680 | 800 | 920 | 1040 |
| A | 660 | 640 | 660 | 780 | 940 | 1340 | 1720 |
| B | 760 | 640 | 640 | 700 | 800 | 1120 | 1650 |
| C | 1000 | 860 | 920 | 1680 | 2000 | - | - |
| D | 1200 | 740 | 680 | 680 | 800 | 900 | 1020 |
| E | 1760 | 1460 | 1160 | 720 | 740 | 880 | 960 |
| H | 1000 | 800 | 720 | 740 | 840 | 980 | 1120 |
| I | 760 | 760 | 880 | 1680 | 2000 | - | - |

Tabelle 2

Eine Reihe der Vergleichssubstanzen, nämlich A, B und I wirken zwar spontan, erreichen aber nur eine ungenügende Langzeitwirkung. Die Vergleichsproben D, E und H sind zwar nach längerer Zeit noch wirksam, jedoch ist die spontane Schaumzerstörung zu schwach ausgeprägt. Die Probe C ist weitgehend unwirksam. Das erfindungsgemäße Mittel zeigt ein ausgeglichenes Verhalten hinsichtlich spontaner und dauerhafter Wirkung.

3) Lösung c, Anfangsschaumwert 1700 ml

| Inhibitor | Schaumvolumen nach Minuten | | | | | | |
|---|---|---|---|---|---|---|---|
| | 0,5 | 1 | 2 | 5 | 10 | 20 | 30 |
| 1 | 960 | 760 | 580 | 580 | 640 | 740 | 960 |
| B | 1200 | 1160 | 1180 | 1480 | 1600 | 1700 | - |

Tabelle 3

Die übrigen Vergleichsprodukte erwiesen sich als noch weniger geeignet als Vergleichsprobe B.

4) Lösung d, Anfangsschaumvolumen 1000 ml

| Inhibitor | Schaumvolumen nach Minuten | | | | | | |
|---|---|---|---|---|---|---|---|
| | 0,5 | 1 | 2 | 5 | 10 | 20 | 30 |
| 1 | 220 | 220 | 240 | 250 | 250 | 280 | 290 |
| A | 250 | 270 | 270 | 310 | 460 | 730 | 980 |
| B | 220 | 240 | 250 | 260 | 260 | 480 | 740 |
| E | 240 | 240 | 250 | 250 | 260 | 280 | 310 |

Tabelle 4

Auch in diesem Vergleichsversuch zeigt sich die Überlegenheit des Mittels nach Beispiel 1.

**Patentansprüche**

1. Blockpolymeres der Formel

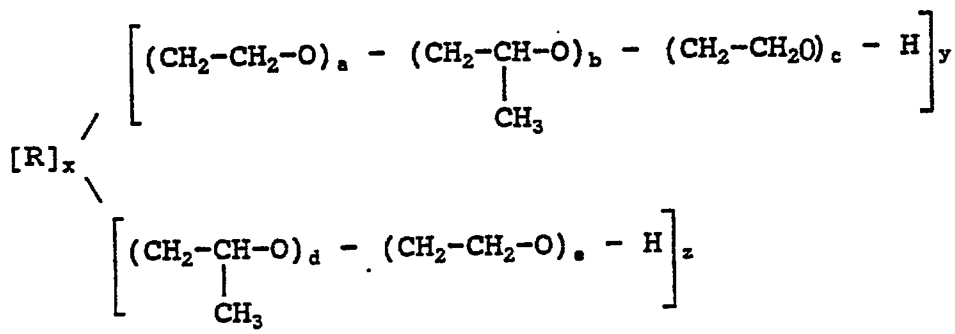

in der R für einen Glycerin- oder Polyglycerinrest mit dem Polymerisationsgrad x = 1 bis 6 steht und die Indices y = (x - z + 2), z = 0 bis 4, a = 1 bis 15, b = 20 bis 100, c = 1 bis 15, d = 20 bis 150 und e = 1 bis 15 bedeuten mit der Maßgabe, daß die Summen (a + c + e) = 3 bis 20, (b + d) = 40 bis 200 und (c + e) = 1 bis 15 bedeuten und y mindestens den Wert 1 besitzt.

2. Blockpolymeres gemäß Anspruch 1, worin die Indices y mindestens 2, a = 1 bis 5, b und d = 30 bis 100, c und e = 1 bis 5 und die Summe (a + c + e) = 3 bis 15 bedeuten.

3. Blockpolymeres gemäß den Ansprüchen 1 und 2, worin R einen Glycerinrest (x = 1) und y die Werte 2 oder 3 und z die Werte 0 oder 1 bedeuten.

4. Verfahren zur Herstellung eines Blockpolymeren gemäß den Ansprüchen 1 bis 3, dadurch gekennzeichnet, daß man 1 Mol Glycerin und/oder Polyglycerin mit dem Polymerisationsgrad x = 1 bis 6 in Gegenwart eines sauren oder alkalischen Alkoxylierungskatalysator in einer 1. Stufe mit 1 bis 15, vorzugsweise 2 bis 10 Mol Ethylenoxid, in einer 2. Stufe mit 50 bis 250, vorzugsweise 80 bis 200 Mol Propylenoxid und in einer 3. Stufe mit 1 bis 15 Mol, vorzugsweise 2 bis 10 Mol Ethylenoxid umsetzt, wobei die insgesamt eingesetzte Menge an Ethylenoxid 2 bis 20, vorzugsweise 3 bis 15 Mol beträgt.

5. Verwendung der Blockpolymeren gemäß den Ansprüchen 1 bis 3 als Entschäumer.

**Claims**

1. A block polymer corresponding to the following formula

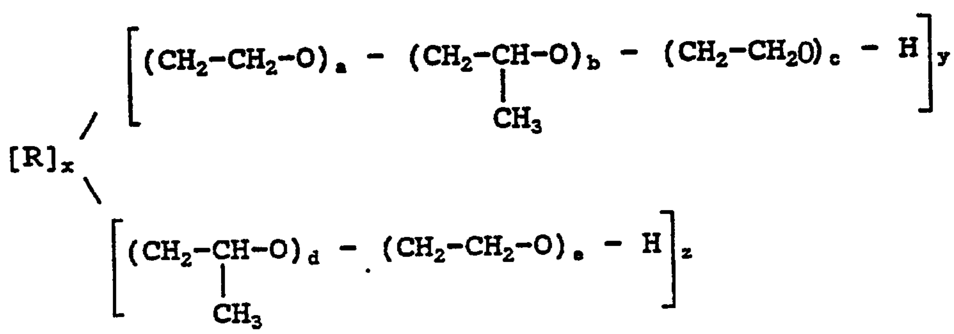

in which R represents a glycerol or polyglycerol function having a degree of polymerization x of from 1 to 6 and the indices y = (x − z + 2), z = 0 to 4, a = 1 to 15, b = 20 to 100, c = 1 to 15, d = 20 to 150 and e = 1 to 15, with the proviso that the sums (a + c + e) = 3 to 20, (b + d) = 40 to 200 and (c + e) = 1 to 15 and y has a value of at least 1.

2. A block polymer as claimed in claim 1, in which the indices y = at least 2, a = 1 to 5, b and d = 30 to 100, c and e = 1 to 5 and the sum (a + c + e) = 3 to 15.

3. A block polymer as claimed in claims 1 and 2, in which R represents a glycerol function (x = 1) and y has a value of 2 or 3 and z a value of 0 or 1.

4. A process for preparing the block polymer claimed in claims 1 to 3, characterized in that 1 mol glycerol and/or polyglycerol having a degree of polymerization x of from 1 to 6 is reacted in a first step with from 1 to 15 and preferably with from 2 to 10 mol ethylene oxide, in a second step with from 50 to 250 mol land preferably with from 80 to 200 mol propylene oxide and in a third step with from 1 to 15 mol and preferably with from 2 to 10 mol ethylene oxide, the reaction being carried out in the presence of an acidic or alkaline alkoxylation catalyst and the total quantity of ethylene oxide used amounting to between 2 and 20 mol and preferably to between 3 and 15 mol.

5. The use of the block polymers claimed in claims 1 to 3 as foam inhibitors.

## Revendications

1. Polymère en blocs de formule:

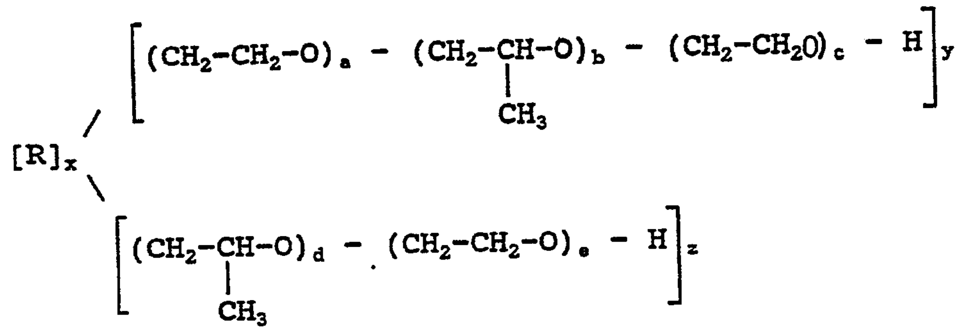

dans laquelle R représente un radical glycérol ou polyglycérol d'un dégré de polymérisation $x = 1$ à 6, tandis que les indices $y = (x - z + 2)$, $z = 0$ à 4, $a = 1$ à 15, $b = 20$ à 100, $c = 1$ à 15, $d = 20$ à 150 et $e = 1$ à 15, avec cette réserve que les sommes $(a + c + e) = 3$ à 20, $(b + d) = 40$ à 200 et $(c + e) = 1$ à 15, y ayant au moins la valeur de 1.

2. Polymère en blocs selon la revendication 1, dans lequel les indices ont la signification suivante: $y =$ au moins 2, $a = 1$ à 5, b et $d = 30$ à 100, c et $e = 1$ à 5 et la somme de $(a + c + e) = 3$ à 15.

3. Polymère en blocs selon les revendications 1 et 2, dans lequel R représente un radical glycérol ($x = 1$) et y a la valeur de 2 ou 3 et z a la valeur de 0 ou 1.

4. Procédé de préparation d'un polymère en blocs selon les revendications 1 à 3, caractérisé en ce que, lors d'une première étape, on fait réagir 1 mole de glycérol et/ou de polyglycérol d'un degré de polymérisation $x = 1$ à 6, en présence d'un catalyseur d'alcoxylation acide ou alcalin, avec 1 à 15, de préférence, 2 à 10 moles d'oxyde d'éthylène puis, au cours d'une deuxième étape, avec 50 à 250, de préférence, 80 à 200 moles d'oxyde de propylène et enfin, lors d'une troisième étape, avec 1 à 15 moles, de préférence, 2 à 10 moles d'oxyde d'éthylène, la quantité totale utilisée d'oxyde d'éthylène étant de 2 à 20, de préférence, de 3 à 15 moles.

5. Utilisation des polymères en blocs selon les revendications 1 à 3 comme inhibiteurs de mousse.